# EUROPEAN PATENT APPLICATION

(11) **EP 2 073 046 A1**
(43) Date of publication of application: **24.06.2009**
(21) Application number: 08166651.3
(22) Date of filing: 15.10.2008
(51) Int. Cl.: G02B 6/34, G02B 6/35, H04Q 11/00

(54) **Wavelength selective switch**

(30) Priority: 17.12.2007 KR 20070132619
(71) Applicant: Electronics and Telecommunications Research Institute, Daejeon (KR)
(72) Inventor: Oh Kee, Kwon, Daejeon (KR); Yong Soon, Baek, Daejeon (KR); Jang Uk, Shin, Daejeon (KR); Young Tak, Han, Daejeon (KR); Dong Hun, Lee, Daejeon (KR); Chul Wook, Lee, Daejeon (KR); Eun Deok, Sim, Daejeon (KR); Jong Hoi, Kim, Daejeon (KR); Sang Pil, Han, Daejeon (KR); Sang Ho, Park, Daejeon (KR)
(74) Representative: Betten & Resch

(57) **Abstract**

Provided is a wavelength selective switch (WSS), and more particularly, a wavelength selective switch for electrically switching a wavelength without physical displacement. The wavelength selective switch includes an optical demultiplexer for dividing an input optical signal into signals having wavelengths corresponding to respective channels, selecting either the optical signal of each channel obtained by dividing the input optical signal or an optical signal input via an add port, and outputting the selected optical signal; and an optical multiplexer including an optical deflecting unit for individually deflecting the optical signals of the respective channels received from the optical demultiplexer according to supplied current or applied voltage, wherein the optical signal of each channel deflected by the optical deflecting unit is output to a specific output port. In the wavelength selective switch, current is supplied to the optical deflectors to switch the channels, resulting in higher reliability, smaller volume and higher switching speed than a conventional wavelength selective switch using mechanical displacement to switch channels.

## Description

### CROSS-REFERENCE TO RELATED APPLICATION

This application claims priority to and the benefit of Korean Patent Application No. 2007-132619, filed December 17, 2007, the disclosure of which is incorporated herein by reference in its entirety.

### BACKGROUND

### 1. Field of the Invention

The present invention relates to a wavelength selective switch (WSS), and more particularly, to a wavelength selective switch for electrically switching a wavelength without physical displacement.

This work was supported by the IT R&D program of MIC/IITA. [2007-S-011-01, Development of Optical Switches for ROADM].

### 2. Discussion of Related Art

As a demand on Fiber-to-the-home (FTTH) increases due to widespread utilization of the FTTH, rapid traffic increase in a metro network is expected. For efficient processing of increasing traffics, the metro network has been evolved from a fixed network structure to a remotely reconfigurable, active variable network structure to flexibly transfer a variety of large data. Since initial cost for equipment purchase can no longer be reduced, cost for network operation that occupies 80% of total cost must be reduced for efficient operation.

Reconfigurable optical add-drop multiplexing (ROADM) selectively extracts a signal required on a node from a multi-channel input optical signal and adds a new signal in a Wavelength Division Multiplexing (WDM) transmission network, which enables network maintenance cost to be significantly reduced through remote control. The ROADM enables channel add/drop in a specific node to be set remotely for high flexibility and efficiency of the WDM network and enables provisioning, monitoring and management on a channel basis for low operation cost.

The ROADM may be broadly classified into a broadcast and select type ROADM and a switch-based ROADM. In the case of the switch-based ROADM, a switch-based ROADM using a full matrix is difficult to implement, has a large volume, and is expensive. A switch-based ROADM using a 2x2 switch must have transmitter/receiver pairs corresponding in number to used wavelengths or have a full matrix switch added on an add/drop path.

Meanwhile, the development of Planar Lightwave Circuit (PLC) technology has led to an integrated planar lightwave circuit (iPLC) structure that includes a multiplexer (MUX)/demultiplexer (Demux), a variable optical attenuator (VOA), and an optical switch. The iPLC structure enables multi-channel add/drop and mass production at low manufacture cost. However, the iPLC structure can be applied only to a ring network due to its limited degree of freedom.

A wavelength selective switch (WSS), which is another form of the switch-based ROADM, has been developed by using a Micro electromechanical system (MEMS) or a Liquid crystal (LC). The WSS may be classified into a two-dimensional WSS and a three-dimensional WSS. The WSS has a high degree of freedom that allows input multi-channel light source to be output to any output port, and accordingly, may be applied to a mesh type network.

However, the conventional WSS has shortcomings of low reliability due to mechanical displacement in switching a channel, and high manufacture cost when being manufactured in a three-dimensional structure. Also, the conventional WSS has a limited number of channels that can be added/dropped on a node due to a limited number of input/output ports.

### SUMMARY OF THE INVENTION

The present invention is directed to a wavelength selective switch having a high degree of freedom, as well as an add/drop function for all channels input on a node.

The present invention is also directed to a high-reliable, two-dimensional waveguide-based wavelength selective switch that can be mass produced at low cost.

One aspect of the present invention provides a wavelength selective switch comprising: an optical demultiplexer for dividing an input optical signal into signals having wavelengths corresponding to respective channels, selecting either the optical signal of each channel obtained by dividing the input optical signal or an optical signal input via an add port, and outputting the selected optical signal; and an optical multiplexer including an optical deflecting unit for individually deflecting the optical signals of the respective channels received from the optical demultiplexer according to supplied current or applied voltage, wherein the optical signal of each channel deflected by the optical deflecting unit is output to a specific output port.

### BRIEF DESCRIPTION OF THE DRAWINGS

The above and other features and advantages of the present invention will become more apparent to those of ordinary skill in the art by describing in detail preferred exemplary embodiments thereof with reference to the attached drawings in which:

FIG. 1 is a block diagram of a wavelength selective switch according to an exemplary embodiment of the present invention; and

FIG. 2 illustrates an example in which an optical multiplexer of the wavelength selective switch is implemented by a concave grating (CG) according to an exemplary embodiment of the present invention.

### DETAILED DESCRIPTION OF EXEMPLARY EMBODIMENTS

Hereinafter, exemplary embodiments of the present invention will be described in detail. However, the present invention is not limited to the exemplary embodiments disclosed below, but can be implemented in various forms. Therefore, the following exemplary embodiments are described in order for this disclosure to be complete and enabling to those of ordinary skill in the art.

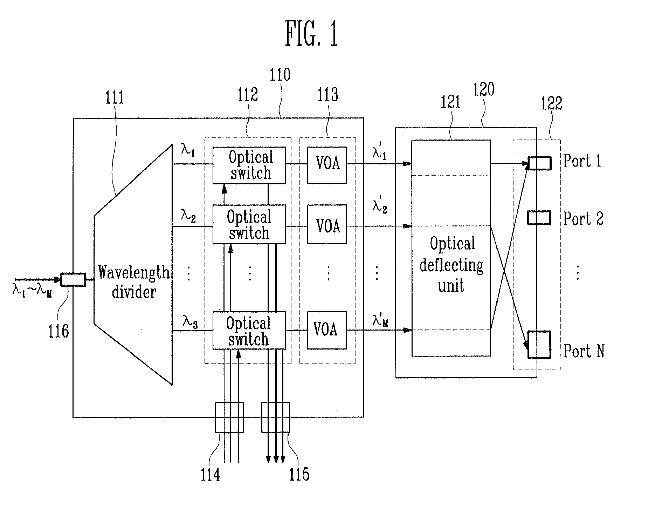

FIG. 1 is a block diagram of a wavelength selective switch according to an exemplary embodiment of the present invention.

Referring to FIG. 1, a wavelength selective switch according to an exemplary embodiment of the present invention includes an optical demultiplexer 110 and an optical multiplexer 120. Here, an input optical signal has M channels. The wavelength selective switch outputs the optical signal via N output ports. In an exemplary embodiment, the optical demultiplexer 110 and the optical multiplexer 120 may be coupled in a hybrid structure.

The optical demultiplexer 110 divides an incident light source into signals having a wavelength λi (where i denotes a channel) corresponding to each channel, selects either a current optical signal on the channel or an optical signal having a new wavelength input via an add port 114 for each channel, sends the selected signal of each channel to the optical multiplexer 120, and outputs a dropped optical signal via a drop port 115.

In an exemplary embodiment, the optical demultiplexer 110 includes a wavelength divider 111, optical switches 112, and variable optical attenuators (VOAs) 113. The wavelength divider 111 divides the optical signal input via an input port 116 into signals having wavelengths corresponding to respective channels. In an exemplary embodiment, the wavelength divider 111 may include an arrayed waveguide grating (AWG) or a concave grating (CG).

The AWG uniformly changes a phase of an optical signal including a plurality of wavelengths in a guided mode and causes an optical signal having a corresponding wavelength to arrive at a specific location through radiation angle change or angular dispersion. This is called linear dispersion.

Meanwhile, the CG performs angular dispersion and linear dispersion by diffracting an incident beam for each wavelength using a periodic grating structure and changing a phase of the incident beam using a concave structure so that the beam is focused in an output direction.

The respective optical signals of the respective channels are input from the wavelength divider 111 to the optical switches 112. In response to an electric signal, each optical switch 112 selects one of an current optical signal on the channel or an optical signal input via the add port 114, outputs the selected optical signal to the corresponding VOA 113, and outputs the other to the drop port 115.

Each VOA 113 adjusts an intensity of the optical signal of each channel in response to an electric signal, and sends the optical signal of each channel to the optical multiplexer 120. In an exemplary embodiment, the optical demultiplexer 110 may include a monitor photodetector for monitoring the optical signal of each channel.

The optical multiplexer 120 outputs the optical signals of the respective channels received from the optical demultiplexer 110, via a plurality of output ports 122. In an exemplary embodiment, the optical multiplexer 120 has a reverse structure of the optical demultiplexer 110, thus the optical multiplexer 120 may be implemented by an arrayed waveguide grating (AWG) or a concave grating (CG).

Here, the optical multiplexer 120 includes an optical deflecting unit 121 for deflecting the optical signal of each channel according to current supply in order to output the optical signal to the desired output port 122. The optical deflecting unit 121 deflects the optical signal of each channel to be individually input to the desired output port 122.

Thus, the optical multiplexer 120 can output the optical signal of each channel with optical signals of other channels via the output ports 122, which allows the wavelength selective switch of the present invention to flexibly combine channels of optical signals output to the output ports 122.

In an actual implementation in which the optical multiplexer 120 is configured of an AWG or a CG, the optical deflecting unit 121 may be incorporated in a free propagation region of the AWG or a slab optical waveguide of the CG.

When the optical multiplexer 120 is configured of an AWG, a waveguide structure is partially modified in a part of the free propagation region of the AWG, for example, through etch or re-growth, to additionally correct phases of the deflected signals, or an additionally phase-adjustable structure is inserted into a waveguide array located between free propagation regions to adjust a phase of a radiation beam.

Meanwhile, when the optical multiplexer 120 is configured of a CG, a deflection characteristic may be partially changed through partial etch or grating pitch adjustment in a part of the slab waveguide. In an exemplary embodiment, the optical deflecting unit 121 may have a structure in which a reflective index of the waveguide is changed by voltage application rather than current application in order to deflect light.

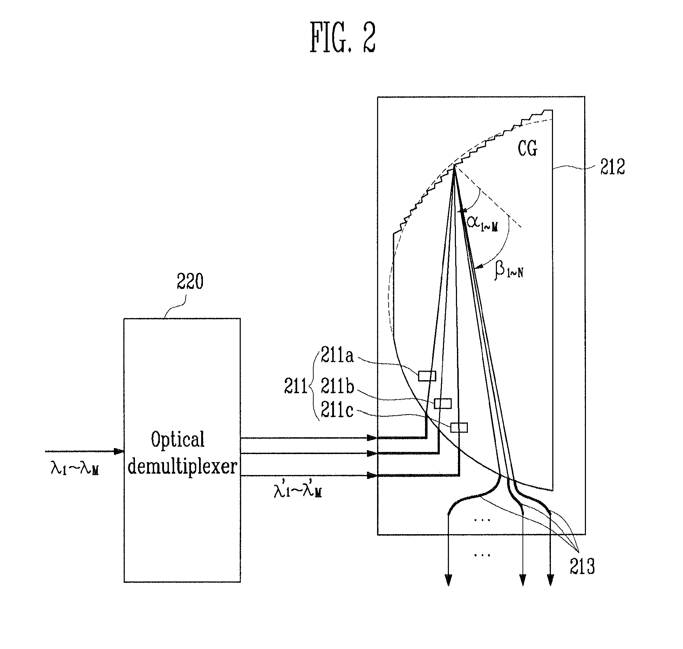

FIG. 2 illustrates an example in which an optical multiplexer of the wavelength selective switch is implemented by a CG according to an exemplary embodiment of the present invention.

Referring to FIG. 2, an optical deflecting unit 211 is configured as an optical deflector array that includes optical deflectors 211 a, 211b, and 211c corresponding in number to channels and incorporated in the CG 212. Each of the optical deflectors 211 a, 211b, and 211c is located at an incident surface of the CG 212 for deflecting an optical signal of each channel sent from an optical demultiplexer 220 according to independently supplied current. In this case, the currents supplied to the optical deflectors 211a, 211 b, and 211c reduce refractive indexes of deflection pattern regions of the optical deflectors 211 a, 211b, and 211c, leading to a change in a refractive index difference between the deflection pattern region and a peripheral region. This results in an adjusted deflection angle of the optical signal.

The CG 212 is designed to diffract the optical signals of the respective channels output via the respective optical deflectors 211 a, 211b, and 211c at the same diffraction angle β1 according to wavelengths λ'₁ to λ'_{M} and incident angles α₁, to α_{M} of the optical signals when no current is supplied to the optical deflectors 211a, 211b, and 211c. Thus, when no current is supplied to the optical deflectors 211a, 211b, and 211c, the optical signals of the respective channels are output via one output waveguide 213.

When current is supplied to the respective optical deflectors 211 a, 211b, and 211c, the optical signals of the respective channels are deflected according to supplied current and are input to the diffraction grating at different incident angles. The optical signals input to the diffraction grating are diffracted at different diffraction angles β₁ to β_{N} and output to the different output waveguides 213.

In order to increase the number of channels of the output waveguide in the CG having the above structure, the optical deflectors may be designed to have a pattern structure in which refractive index is greatly changed with the same supply current or a pattern structure in which beam is greatly deflected with the same refractive index change.

In the wavelength selective switch of the present invention, current is supplied to the optical deflectors to switch the channels, resulting in higher reliability, smaller volume and higher switching speed than a conventional wavelength selective switch using mechanical displacement to switch channels.

The wavelength selective switch of the present invention has a multi-channel add/drop function and a high degree of freedom, which makes it possible to build an efficient mesh network and simplify element arrangement and operation in a WDM network.

Furthermore, the wavelength selective switch of the present invention is based on a two-dimensional waveguide. Thus, the wavelength selective switch can be mass produced at low cost.

While the invention has been shown and described with reference to certain exemplary embodiments thereof, it will be understood by those skilled in the art that various changes in form and details may be made therein without departing from the spirit and scope of the invention as defined by the appended claims.
In summary an embodiment of the invention can be described as follows: Provided is a wavelength selective switch (WSS), and more particularly, a wavelength selective switch for electrically switching a wavelength without physical displacement. The wavelength selective switch includes an optical demultiplexer for dividing an input optical signal into signals having wavelengths corresponding to respective channels, selecting either the optical signal of each channel obtained by dividing the input optical signal or an optical signal input via an add port, and outputting the selected optical signal; and an optical multiplexer including an optical deflecting unit for individually deflecting the optical signals of the respective channels received from the optical demultiplexer according to supplied current or applied voltage, wherein the optical signal of each channel deflected by the optical deflecting unit is output to a specific output port. In the wavelength selective switch, current is supplied to the optical deflectors to switch the channels, resulting in higher reliability, smaller volume and higher switching speed than a conventional wavelength selective switch using mechanical displacement to switch channels.

## Claims

1. A wavelength selective switch comprising:
an optical demultiplexer for dividing an input optical signal into signals having wavelengths corresponding to respective channels, selecting either the optical signal of each channel obtained by dividing the input optical signal or an optical signal input via an add port, and outputting the selected optical signal; and
an optical multiplexer including an optical deflecting unit for individually deflecting the optical signals of the respective channels received from the optical demultiplexer according to supplied current or applied voltage, wherein the optical signal of each channel deflected by the optical deflecting unit is output to a specific output port.

2. The switch of claim 1, wherein the optical multiplexer comprises an arrayed waveguide grating or a concave grating, and
the optical deflecting unit is incorporated in the arrayed waveguide grating or the concave grating.

3. The switch of claim 2, wherein the optical deflecting unit is incorporated in a free propagation region of the arrayed waveguide grating or a slab optical waveguide of the concave grating.

4. The switch of any of the preceding claims, wherein the optical deflecting unit comprises an optical deflector array including optical deflectors corresponding in number to the channels.

5. The switch of claim 4, wherein each optical deflector of the optical deflector array independently deflects an optical signal of one channel.

6. The switch of any of the preceding claims, wherein the optical demultiplexer comprises:
a wavelength divider for dividing the input optical signal into signals having wavelengths corresponding to the respective channels;
optical switches for selecting either the optical signal obtained by dividing the input optical signal or the optical signal input via the add port, and outputting the selected optical signal; and
variable optical attenuators (VOAs) for adjusting intensity of the optical signal output by the optical switch and sending the optical signal to the optical multiplexer.

7. The switch of claim 6, wherein the wavelength divider comprises an arrayed waveguide grating or a concave grating.

8. The switch of claim 6 or 7, wherein the optical switch outputs an unselected one of the optical signal obtained by dividing the input optical signal and the optical signal input via the add port, to a drop port.

9. The switch of any of claims 6 to 8, wherein the optical demultiplexer further comprises a monitor photodetector for observing the optical signal of each channel.

10. The switch of any of the preceding claims, wherein the optical demultiplexer and the optical multiplexer are coupled in a hybrid structure.
